(19) Europäisches Patentamt / European Patent Office / Office européen des brevets

(11) **EP 2 818 688 A1**

(12) **EUROPEAN PATENT APPLICATION**
published in accordance with Art. 153(4) EPC

(43) Date of publication:
**31.12.2014 Bulletin 2015/01**

(21) Application number: **12869461.9**

(22) Date of filing: **22.11.2012**

(51) Int Cl.:
*F02M 61/16* [(2006.01)]   *F02M 61/14* [(2006.01)]
*F16J 15/10* [(2006.01)]

(86) International application number:
**PCT/JP2012/080330**

(87) International publication number:
**WO 2013/125116 (29.08.2013 Gazette 2013/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.02.2012   JP 2012038641**

(71) Applicant: **NOK Corporation
Tokyo 105-8585 (JP)**

(72) Inventors:
• **TADANO Hikaru
Kitaibaraki-shi
Ibaraki 319-1535 (JP)**
• **MONMA Hiroaki
Kitaibaraki-shi
Ibaraki 319-1535 (JP)**

(74) Representative: **TBK
Bavariaring 4-6
80336 München (DE)**

(54) **SEALING STRUCTURE**

(57)      A sealing structure which is able to reduce an inserting load, while enhancing a sealing performance is provided.
The sealing structure is characterized in that an annular groove (211) has a step on its groove bottom, and is provided with a primary annular groove (211a) disposed at one side of the step, and a secondary annular groove (211b) disposed at another side of the step, and a gasket (400) is disposed so as to be filled into the primary annular groove (211a), and a gap (D2) between an injector and a mounting hole at a boundary section between the primary annular groove (211 a) and the secondary annular groove (211b) is larger than a minute gap (D1) at an opposite side of the secondary annular groove (211b) intervened by the primary annular groove (211 a).

Fig. 3A

EP 2 818 688 A1

(A)

211

211a

(300)

(200)

310

211b

400

(C)

*Fig. 3B*

**Description**

TECHNICAL FIELD

The present invention relates to a sealing structure to seal an annular gap between an injector and a housing.

BACKGROUND ART

In a mounting portion of an injector to a cylinder head, an annular gasket which seals an annular gap between the injector and a mounting hole is provided. In such a gasket, there has been known a technique in which the volume of the gasket, when it is in a state where no external force is acting thereon, is made larger than the volume of a space in which the gasket is to be fitted, so that its sealing performance is improved by filling the gasket into an annular groove in which the gasket is to be fitted (refer to a first patent document).

In such a technique, however, when an injector with the gasket fitted thereon is being inserted into a mounting hole, a large load may be applied, and thus the gasket may be exceptionally deformed or damaged. In addition, it is considered that with such a technique, manual insertion may be difficult.

PRIOR ART REFERENCES

PATENT DOCUMENTS

First Patent Document: Japanese patent application laid-open No. 2002-81548

SUMMARY OF THE INVENTION

PROBLEM TO BE SOLVED BY THE INVENTION

The object of the present invention is to provide a sealing structure that is able to reduce an inserting load, while enhancing a sealing performance.

MEANS FOR SOLVING THE PROBLEM

In order to solve the above-mentioned problem, the present invention adopts the following means.
That is, a sealing structure of the present invention is characterized by comprising:

an injector;
a housing having a mounting hole in which the injector is mounted; and
an annular gasket being fitted in an annular groove formed in an outer periphery of the injector to seal an annular gap between the injector and the mounting hole;
wherein the annular groove has a step on its groove bottom;
the annular groove comprises:

a primary annular groove disposed at one side of the step; and
a secondary annular groove disposed at another side of the step;

the gasket is disposed so that it is filled into the primary annular groove; and
a gap between the injector and the mounting hole at a boundary section between the primary annular groove and the secondary annular groove is larger than a minute gap at an opposite side of the secondary annular groove intervened by the primary annular groove.

According to the present invention, because the gasket is filled into the primary annular groove, it becomes possible to enhance a sealing performance. In addition, because the secondary annular groove is provided, a part of the gasket filled into the primary annular groove can protrude into the secondary annular groove. For that reason, it is possible to reduce an inserting load at the time of inserting the injector with the gasket fitted thereon into the mounting hole. Further, the gap between the injector and the mounting hole at the boundary section between the primary annular groove and the secondary annular groove is larger than the minute gap at the opposite side of the secondary annular groove intervened by the primary annular groove. Hence, it becomes possible to cause a part of the gasket to protrude to the secondary annular groove side in a more reliable manner.

It is further characterized in that the following relation is satisfied:

$$S1 < S3 < (S1 + S2)$$

where S1 is an area of a cross section of an annular space formed by the primary annular groove and a surface of the mounting hole intersected by a plane including an axis of the annular space, S2 is an area of a cross section of an annular space formed by the secondary annular groove and the surface of the mounting hole intersected by a plane including an axis of the annular space, S3 is an area of a cross section of the gasket intersected by a plane including an axis of the gasket when the gasket is in a state of not being subjected to any external force.

According to this, the gasket can be filled into the primary annular groove, while the gasket does not completely fill the secondary annular groove. For that reason, it is possible to suppress the gasket from protruding into the outside of the annular groove. In addition, along with this, it is also possible to suppress the inserting load.

It is preferable that the secondary annular groove be disposed at a combustion chamber side with respect to the primary annular groove.

According to this, when the injector with the gasket fitted thereon is inserted into the mounting hole, frictional resistance against the gasket acts on the opposite side of the combustion chamber, thus the gasket can be filled into the primary annular groove side in a more reliable manner. In addition, a portion of the gasket which has been filled into the secondary annular groove side is subjected to the pressure of a combustion gas, thus the filled state of the gasket with respect to the primary annular groove can be maintained, thereby making it possible to enhance the sealing performance thereof. Here, note that even if the gasket has been deformed due to creep over time, the gasket can stably maintain its filled state with respect to the primary annular groove by receiving the pressure of the combustion gas and the durability thereof can also be improved.

It is preferable that a shape of the cross section of the gasket intersected by the plane including the axis of the gasket when the gasket is in a state of not being subjected to any external force is rectangular.

Here, it is preferable that the primary annular groove has an annular protrusion portion formed on its groove bottom in a vicinity of a center in an axial direction thereof.

As a result of this, the contact pressure of the gasket with respect to the mounting hole can be partially made high, thus making it possible to enhance the sealing performance.

Here, note that the above-mentioned respective configurations can be combined with one another wherever possible.

EFFECT OF THE INVENTION

As explained above, according to the present invention, it is possible to reduce the inserting load, while enhancing the sealing performance.

BRIEF DESCRIPTION OF THE DRAWINGS

Fig. 1 is a schematic cross sectional view showing a sealing structure according to an embodiment of the present invention.
Fig. 2 is a partially broken cross sectional view of a gasket according to the embodiment of the present invention.
Figs. 3A and 3B are schematic cross sectional views of a sealing structure according to a first embodiment of the present invention.
Figs. 4A and 4B are schematic cross sectional views of a sealing structure according to a second embodiment of the present invention.
Figs. 5A and 5B are schematic cross sectional views of a sealing structure according to a third embodiment of the present invention.
Figs. 6A and 6B are schematic cross sectional views of a sealing structure according to a fourth embodiment of the present invention.
Figs. 7A and 7B are schematic cross sectional views of a sealing structure according to a fifth embodiment of the present invention.
Figs. 8A and 8B are schematic cross sectional views of a sealing structure according to a sixth embodiment of the present invention.

MODES FOR CARRYING OUT THE INVENTION

Hereinafter, modes for carrying out the present invention will be exemplarily described in detail based on embodiments thereof with reference to the attached drawings. However, the dimensions, materials, shapes, relative arrangements and so on of component parts described in the embodiments are not intended to limit the scope of the present invention to these alone in particular as long as there are no specific descriptions.

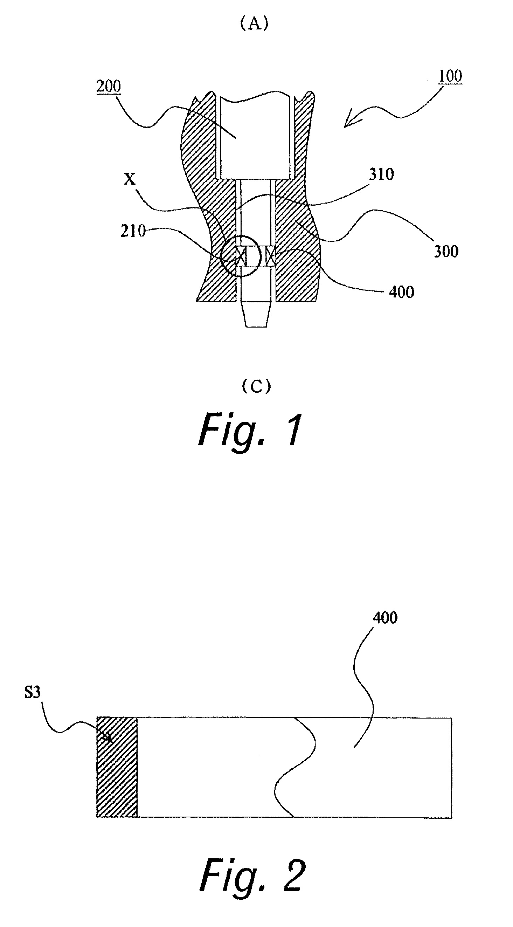

Referring to Figs. 1 and 2, a sealing structure according to an embodiment of the present invention will be explained. The sealing structure 100 according to this embodiment is composed of an injector 200, a housing 300 having a mounting hole 310 in which the injector 200 is mounted, and a gasket 400. Here, note that in Fig. 1, with respect to the injector 200, only the vicinity of a tip end thereof which constitutes the sealing structure is shown. In addition, the housing 300 corresponds to a cylinder head of an engine, wherein only a portion of the housing 300 which constitutes the sealing structure is shown.

The gasket 400 is an annular member composed of PTFE (tetrafluoroethylene resin). The gasket 400 is also a member having a cylindrical shape, wherein the shape of a cross section thereof intersected by a plane including its axis is a rectangle when the gasket 400 is in a state of not being subjected to any external force (refer to Fig. 2). This gasket 400 is fitted in an annular groove 210 formed in an outer periphery of the injector 200, and seals an annular gap between the injector 200 and the mounting hole 310.

(First Embodiment)

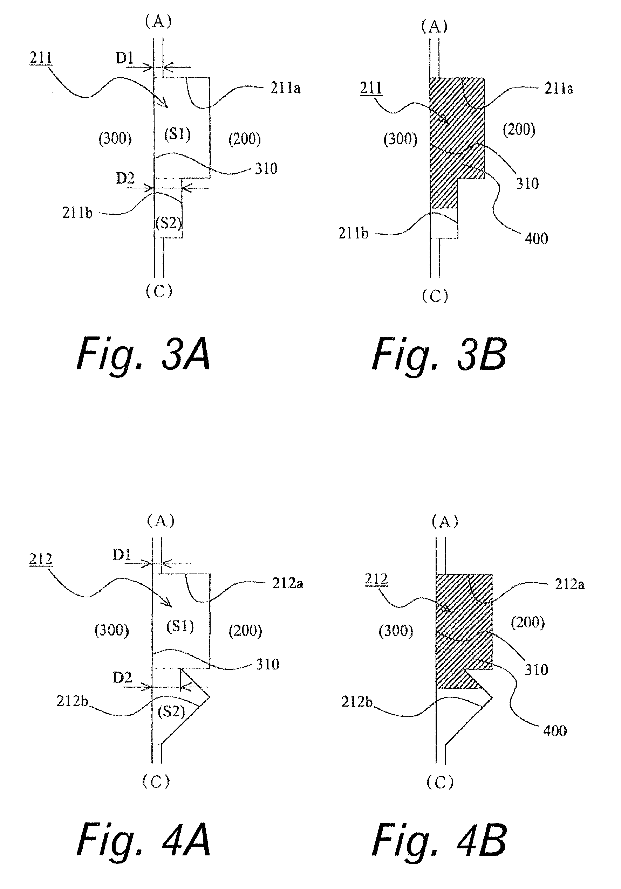

Referring to Figs. 3A and 3B, a sealing structure according to a first embodiment of the present invention will be explained. Figs. 3A and 3B are schematic cross sectional views of the sealing structure according to the first embodiment of the present invention, and correspond to enlarged views of a portion X in Fig. 1. Here, note that Fig. 3A is a view with a gasket 400 omitted, and Fig. 3B is a view with the gasket 400 illustrated.

In this embodiment, an annular groove 211 formed on the outer periphery of an injector 200 has a step on its groove bottom, and is composed of a primary annular groove 211 a disposed at one side of this step and a secondary annular groove 211b disposed at the other side thereof. Here, note that the step is such that its diameter becomes larger from an atmospheric air side (A) to a combustion chamber side (C). The groove bottoms of the primary annular groove 211 a and the secondary annular groove 211b are each composed of a cylindrical surface. The primary annular groove 211a is disposed at the atmospheric air side (A), and the secondary annular groove 211b is disposed at the combustion chamber side (C). Then, it is configured such that a gap D2 between the injector 200 and the mounting hole 310 at a boundary section between the primary annular groove 211 a and the secondary annular groove 211b is larger than a minute gap D1 at the opposite side of the secondary annular groove 211b intervened by the primary annular groove 211 a. Here, note that the above-mentioned gap D2 is smaller than a distance between the groove bottom of the primary annular groove 211a and the mounting hole 310.

In addition, in this embodiment, with respect to areas S1, S2 shown in Fig. 3A and an area S3 shown in Fig. 2, it is configured such that these areas satisfy the relation S1 < S3 < (S1 + S2). Here, the area S1 is an area of a cross section of an annular space formed by the primary annular groove 211 a and a surface of the mounting hole 310 intersected by a plane including an axis of the annular space. And, the area S2 is an area of a cross section of an annular space formed by the secondary annular groove 211b and the surface of the mounting hole 310 intersected by a plane including an axis of the annular space. Moreover, the area S3 is an area of a cross section of the gasket 400 intersected by a plane including its axis when gasket 400 is in a state of not being subjected to any external force.

Then, when inserting the injector 200 into the housing 300, the injector 200 is fitted into the mounting hole 310 in a direction from the atmospheric air side (A) toward the combustion chamber side (C) with the gasket 400 being fitted into the annular groove 211 of the injector 200. As a result of this, the gasket 400, which has a rectangular cross section when it is in a state of not being subjected to any external force, receives a force towards inside from an inner peripheral surface of the mounting hole 310 and deforms to conform with the shape of the annular groove 211. More specifically, the gasket 400 is filled (substantially) completely with respect to the primary annular groove 211a, and a part of a remaining portion of the gasket is filled into the secondary annular groove 211b (refer to Fig. 3B).

<Advantages of the Sealing Structure according to this Embodiment>

In accordance with the sealing structure according to this embodiment as configured in the above manner, because the gasket 400 is (substantially) completely filled into the primary annular groove 211a, it becomes possible to enhance the sealing performance thereof. In addition, because the secondary annular groove 211b is provided, the part of the gasket 400 filled into the primary annular groove 211a can protrude into the secondary annular groove 211b. For that reason, it is possible to reduce the inserting load at the time of inserting the injector 200 with the gasket 400 fitted thereon into the mounting hole 310. Accordingly, it is possible to reduce the inserting load, while enhancing the sealing performance.

In addition, the gap D2 between the injector 200 and the mounting hole 310 at the boundary section between the primary annular groove 211a and the secondary annular groove 211b is larger than the minute gap D1 at the opposite side of the secondary annular groove 211b intervened by the primary annular groove 211a. Hence, it becomes possible to cause a part of the gasket 400 to protrude to the secondary annular groove 211b side in a more reliable manner.

Moreover, as mentioned above, with respect to the areas S1, S2, S3 shown in Figs. 2 and 3A, because they are configured to satisfy the relation S1 < S3 < (S1 + S2), the gasket 400 can be filled (substantially) completely into the primary annular groove 211a, while it is possible to suppress the gasket 400 from completely filling the secondary annular groove 211 b. Accordingly, it is possible to suppress the gasket 400 from protruding into the outside of the annular groove 211. In addition, along with this, it is also possible to suppress the inserting load.

Further, the secondary annular groove 211b is disposed at the combustion chamber side (C) with respect to the primary annular groove 211a. For that reason, when the injector 200 with the gasket 400 fitted thereon is inserted into the mounting hole 310, frictional resistance against the gasket 400 acts on the opposite side of the combustion chamber (C). Accordingly, the gasket 400 can be filled into the primary annular groove 211a side in a more reliable manner. In addition, a portion of the gasket 400 which has been filled into the secondary annular groove 211b side is subjected to the pressure of a combustion gas, thus the filled state of the gasket 400 with respect to the primary annular groove 211a can be maintained, thereby making it possible to enhance the sealing performance thereof. Here, note that even if the gasket 400 has been deformed due to creep over time, the gasket 400 can stably maintain its filled state with respect to the primary annular groove 211 a by receiving the pressure of the combustion gas and the durability thereof can also be improved.

(Second Embodiment)

Referring to Figs. 4A and 4B, a sealing structure according to a second embodiment of the present invention will be explained. Figs. 4A and 4B are schematic cross sectional views of the sealing structure according to the second embodiment of the present invention, and correspond to enlarged views of the portion X in Fig. 1. Here, note that Fig. 4A is a view with a gasket 400 omitted, and Fig. 4B is a view with the gasket 400 illustrated.

In this embodiment, an annular groove 212 formed on the outer periphery of an injector 200 has a step in its groove bottom, and is composed of a primary annular groove 212a disposed at one side of this step and a secondary annular groove 212b disposed at the other side thereof. Here, note that the step is such that its diameter becomes larger from an atmospheric air side (A) to a combustion chamber side (C). Similar to the case of the above-mentioned first embodiment, the groove bottom of the primary annular groove 212a is composed of a cylindrical surface. In contrast to this, in this embodiment, the groove bottom of the secondary annular groove 212b is composed of two adjacent tapered surfaces in such a manner that the groove bottom first shrinks thereafter expands in diameter in a direction from the atmospheric air side (A) toward the combustion chamber side (C).

The configuration in which the primary annular groove 212a is disposed at the atmospheric air side (A), and the secondary annular groove 212b is disposed at the combustion chamber side (C) is similar to the above-mentioned first embodiment. In addition, the configuration in which a gap D2 is formed to be larger than a minute gap D1 is also similar to the first embodiment. Here, note that the above-mentioned gap D2 is smaller than a distance between the groove bottom of the primary annular groove 212a and a mounting hole 310. As for the definitions of D1 and D2, their explanations are omitted since they are the same as those explained in the first embodiment. Also, with respect to areas S1, S2 shown in Fig. 4A and the area S3 shown in Fig. 2, they are configured to satisfy the relation S1 < S3 < (S1 + S2), as in the above-mentioned first embodiment. As for the definitions of S1, S2, S3, their explanations are omitted since they are the same as those explained in the first embodiment. Further, as for a method to insert the injector 200, as well as a behavior and a state of the gasket 400 when the injector 200 has been inserted, their explanations are omitted since they are the same as those explained in the first embodiment. Here, note that the gasket 400 is configured such that it can be filled into a portion of the secondary annular groove 212b where its tapered surface shrinks in diameter in a direction from the atmospheric air side (A) toward the combustion chamber side (C) (refer to Fig. 4B).

In the sealing structure according to this embodiment as configured in the above manner, too, the same effects as those in the case of the above-mentioned first embodiment can be obtained. In addition, in the case of this embodiment, the gasket 400 is configured such that it can be filled into the portion of the secondary annular groove 212b where its tapered surface shrinks in diameter in the direction from the atmospheric air side (A) toward the combustion chamber side (C). As a result of this, the area of a portion of the gasket 400 that receives the pressure of the combustion gas can be made larger, as compared to the case of the first embodiment. According to this, a force that the gasket 400 receives in the direction towards the primary annular groove 212a from the pressure of the combustion gas becomes larger as compared to the case of the first embodiment, thus making it possible to maintain the filled state of the gasket 400 with respect to the primary annular groove 212a to a greater extent.

(Third Embodiment)

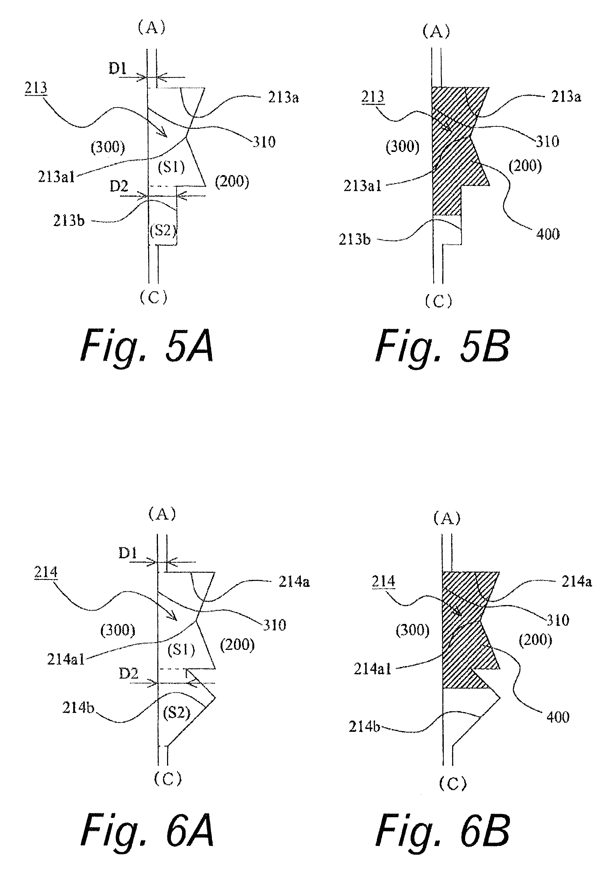

Referring to Figs. 5A and 5B, a sealing structure according to a third embodiment of the present invention will be explained. Figs. 5A and 5B are schematic cross sectional views of the sealing structure according to the third embodiment of the present invention, and correspond to enlarged views of the portion X in Fig. 1. Here, note that Fig. 5A is a view with a gasket 400 omitted, and Fig. 5B is a view with the gasket 400 illustrated.

In this embodiment, an annular groove 213 formed on the outer periphery of an injector 200 has a step in its groove bottom, and is composed of a primary annular groove 213a disposed at one side of this step and a secondary annular groove 213b disposed at the other side thereof. Here, note that the step is such that its diameter becomes larger from an atmospheric air side (A) to a combustion chamber side (C). The groove bottom of the primary annular groove 213a is composed of two adjacent tapered surfaces in such a manner that the groove bottom first expands thereafter shrinks in diameter in a direction from the atmospheric air side (A) toward the combustion chamber side (C). As a result of this, an annular protrusion portion 213a1 is formed on the groove bottom of the primary annular groove 213a in the vicinity of a center in an axial direction thereof. In addition, similar to the case of the above-mentioned first embodiment, the groove bottom of the secondary annular groove 213b is composed of a cylindrical surface.

The configuration in which the primary annular groove 213a is disposed at the atmospheric air side (A), and the secondary annular groove 213b is disposed at the combustion chamber side (C) is similar to the above-mentioned first embodiment. In addition, the configuration in which a gap D2 is formed to be larger than a minute gap D1 is also similar to the first embodiment. Here, note that the above-mentioned gap D2 is smaller than a distance (the smallest distance) between the groove bottom of the primary annular groove 213a and a mounting hole 310. As for the definitions of D1 and D2, their explanations are omitted since they are the same as those explained in the first embodiment. Also, with respect to areas S1, S2 shown in Fig. 5A and the area S3 shown in Fig. 2, they are configured to satisfy the relation S1 < S3 < (S1 + S2), as in the above-mentioned first embodiment. As for the definitions of S1, S2, S3, their explanations are omitted since they are the same as those explained in the first embodiment. Further, as for a method to insert the injector 200, as well as a behavior and a state of the gasket 400 when the injector 200 has been inserted, their explanations are omitted since they are the same as those explained in the first embodiment.

In the sealing structure according to this embodiment as configured in the above manner, too, the same effects as those in the case of the above-mentioned first embodiment can be obtained. In addition, in the case of this embodiment, on the groove bottom of the primary annular groove 213a, the annular protrusion portion 213a1 is formed in the vicinity of the center in the axial direction thereof. As a result of this, the contact pressure of the gasket 400 against the mounting hole 310 can be partially increased, thus making it possible to enhance the sealing performance thereof.

(Fourth Embodiment)

Referring to Figs. 6A and 6B, a sealing structure according to a fourth embodiment of the present invention will be explained. Figs. 6A and 6B are schematic cross sectional views of the sealing structure according to the fourth embodiment of the present invention, and correspond to enlarged views of the portion X in Fig. 1. Here, note that Fig. 6A is a view with a gasket 400 omitted, and Fig. 6B is a view with the gasket 400 illustrated.

In this embodiment, an annular groove 214 formed on the outer periphery of an injector 200 has a step in its groove bottom, and is composed of a primary annular groove 214a disposed at one side of this step and a secondary annular groove 214b disposed at the other side thereof. Here, note that the step is such that its diameter becomes larger from an atmospheric air side (A) to a combustion chamber side (C). Similar to the case of the third embodiment, the groove bottom of the primary annular groove 214a is composed of two adjacent tapered surfaces in such a manner that the groove bottom first expands thereafter shrinks in diameter in a direction from the atmospheric air side (A) toward the combustion chamber side (C). In addition, the groove bottom of the secondary annular groove 214b is composed of two adjacent tapered surfaces in such a manner that the groove bottom first shrinks thereafter expands in diameter in a direction from the atmospheric air side (A) toward the combustion chamber side (C).

The configuration in which the primary annular groove 214a is disposed at the atmospheric air side (A), and the secondary annular groove 214b is disposed at the combustion chamber side (C) is similar to the above-mentioned first embodiment. In addition, the configuration in which a gap D2 is formed to be larger than a minute gap D1 is also similar to the first embodiment. Here, note that the above-mentioned gap D2 is smaller than a distance (the smallest distance) between the groove bottom of the primary annular groove 214a and a mounting hole 310. As for the definitions of D1 and D2, their explanations are omitted since they are the same as those explained in the first embodiment. Also, with respect to areas S1, S2 shown in Fig. 6A and the area S3 shown in Fig. 2, they are configured to satisfy the relation S1 < S3 < (S1 + S2), as in the above-mentioned first embodiment. As for the definitions of S1, S2, S3, their explanations are omitted since they are the same as those explained in the first embodiment. Further, as for a method to insert the injector 200, as well as a behavior and a state of the gasket 400 when the injector 200 has been inserted, their explanations are omitted since they are the same as those explained in the first embodiment. Here, note that the gasket 400 is configured such that it can be filled into a portion of the secondary annular groove 214b where its tapered surface shrinks in diameter in a direction from the atmospheric air side (A) toward the combustion chamber side (C) (refer to Fig. 6B).

In the sealing structure according to this embodiment as configured in the above manner, too, the same effects as those in the case of the above-mentioned first embodiment can be obtained. In addition, in the case of this embodiment, the gasket 400 is configured such that it can be filled into the portion of the secondary annular groove 214b where its tapered surface shrinks in diameter in the direction from the atmospheric air side (A) toward the combustion chamber side (C). As a result of this, the area of a portion of the gasket 400 that receives the pressure of the combustion gas can be made larger, as compared to the case of the first embodiment. According to this, a force that the gasket 400 receives in the direction towards the primary annular groove 214a from the pressure of the combustion gas becomes larger as compared to the case of the first embodiment, thus making it possible to maintain the filled state of the gasket 400 with respect to the primary annular groove 214a to a greater extent. Moreover, in the case of this embodiment, on the groove bottom of the primary annular groove 214a, the annular protrusion portion 214a1 is formed in the vicinity of the center in the axial direction thereof. As a result of this, the contact pressure of the gasket 400 against the mounting hole 310 can be partially increased, thus making it possible to enhance the sealing performance thereof.

(Fifth Embodiment)

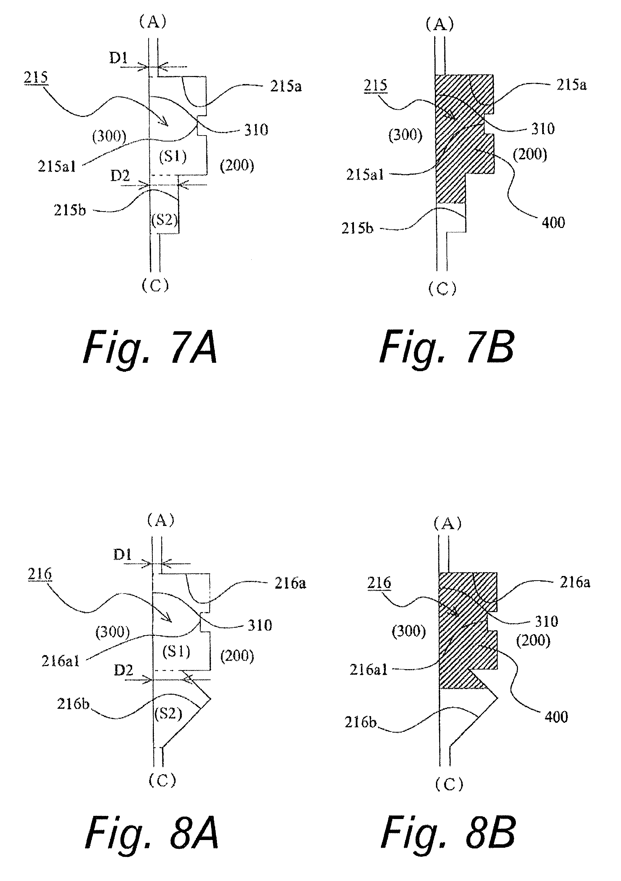

Referring to Figs. 7A and 7B, a sealing structure according to a fifth embodiment of the present invention will be explained. Figs. 7A and 7B are schematic cross sectional views of the sealing structure according to the fifth embodiment of the present invention, and correspond to enlarged views of the portion X in Fig. 1. Here, note that Fig. 7A is a view with a gasket 400 omitted, and Fig. 7B is a view with the gasket 400 illustrated.

In this embodiment, an annular groove 215 formed on the outer periphery of an injector 200 has a step in its groove bottom, and is composed of a primary annular groove 215a disposed at one side of this step and a secondary annular groove 215b disposed at the other side thereof. Here, note that the step is such that its diameter becomes larger from an atmospheric air side (A) to a combustion chamber side (C). The primary annular groove 215a has a groove bottom which is composed of a cylindrical surface as a whole, but an annular protrusion portion 215a1 is formed in the vicinity of a center in an axial direction thereof. In addition, similar to the case of the above-mentioned first embodiment, the groove bottom of the secondary annular groove 215b is composed of a cylindrical surface.

The configuration in which the primary annular groove 215a is disposed at the atmospheric air side (A), and the secondary annular groove 215b is disposed at the combustion chamber side (C) is similar to the above-mentioned first embodiment. In addition, the configuration in which a gap D2 is formed to be larger than a minute gap D1 is also similar to the first embodiment. Here, note that the above-mentioned gap D2 is smaller than a distance (the smallest distance) between the groove bottom of the primary annular groove 215a and a mounting hole 310. As for the definitions of D1 and D2, their explanations are omitted since they are the same as those explained in the first embodiment. Also, with respect to areas S1, S2 shown in Fig. 7A and the area S3 shown in Fig. 2, they are configured to satisfy the relation S1 < S3 < (S1 + S2), as in the above-mentioned first embodiment. As for the definitions of S1, S2, S3, their explanations are omitted since they are the same as those explained in the first embodiment. Further, as for a method to insert the injector 200, as well as a behavior and a state of the gasket 400 when the injector 200 has been inserted, their explanations are omitted since they are the same as those explained in the first embodiment.

In the sealing structure according to this embodiment as configured in the above manner, too, the same effects as those in the case of the above-mentioned first embodiment can be obtained. In addition, in the case of this embodiment, on the groove bottom of the primary annular groove 215a, the annular protrusion portion 215a1 is formed in the vicinity of the center in the axial direction thereof. As a result of this, the contact pressure of the gasket 400 against the mounting hole 310 can be partially increased, thus making it possible to enhance the sealing performance thereof.

(Sixth Embodiment)

Referring to Figs. 8A and 8B, a sealing structure according to a sixth embodiment of the present invention will be explained. Figs. 8A and 8B are schematic cross sectional views of the sealing structure according to the sixth embodiment of the present invention, and correspond to enlarged views of the portion X in Fig. 1. Here, note that Fig. 8A is a view with a gasket 400 omitted, and Fig. 8B is a view with the gasket 400 illustrated.

In this embodiment, an annular groove 216 formed on the outer periphery of an injector 200 has a step in its groove bottom, and is composed of a primary annular groove 216a disposed at one side of this step and a secondary annular groove 216b disposed at the other side thereof. Here, note that the step is such that its diameter becomes larger from an atmospheric air side (A) to a combustion chamber side (C). The primary annular groove 216a has a groove bottom which is composed of a cylindrical surface as a whole, but an annular protrusion portion 216a1 is formed in the vicinity of a center in an axial direction thereof. In addition, the groove bottom of the secondary annular groove 216b is composed of two adjacent tapered surfaces in such a manner that the groove bottom first shrinks thereafter expands in diameter in a direction from the atmospheric air side (A) toward the combustion chamber side (C).

The configuration in which the primary annular groove 216a is disposed at the atmospheric air side (A), and the secondary annular groove 216b is disposed at the combustion chamber side (C) is similar to the above-mentioned first embodiment. In addition, the configuration in which a gap D2 is formed to be larger than a minute gap D1 is also similar to the first embodiment. Here, note that the above-mentioned gap D2 is smaller than a distance (the smallest distance) between the groove bottom of the primary annular groove 216a and a mounting hole 310. As for the definitions of D1 and D2, their explanations are omitted since they are the same as those explained in the first embodiment. Also, with respect to areas S1, S2 shown in Fig. 8A and the area S3 shown in Fig. 2, they are configured to satisfy the relation S1 < S3 < (S1 + S2), as in the above-mentioned first embodiment. As for the definitions of S1, S2, S3, their explanations are omitted since they are the same as those explained in the first embodiment. Further, as for a method to insert the injector 200, as well as a behavior and a state of the gasket 400 when the injector 200 has been inserted, their explanations are omitted since they are the same as those explained in the first embodiment. Here, note that the gasket 400 is configured such that it can be filled into a portion of the secondary annular groove 216b where its tapered surface shrinks in diameter in a direction from the atmospheric air side (A) toward the combustion chamber side (C) (refer to Fig. 8B).

In the sealing structure according to this embodiment as configured in the above manner, too, the same effects as those in the case of the above-mentioned first embodiment can be obtained. In addition, in the case of this embodiment, the gasket 400 is configured such that it can be filled into the portion of the secondary annular groove 216b where its tapered surface shrinks in diameter in the direction from the atmospheric air side (A) toward the combustion chamber side (C). As a result of this, the area of a portion of the gasket 400 that receives the pressure of the combustion gas can be made larger, as compared to the case of the first embodiment. According to this, a force that the gasket 400 receives in the direction towards the primary annular groove 216a from the pressure of the combustion gas becomes larger as compared to the case of the first embodiment, thus making it possible to maintain the filled state of the gasket 400 with respect to the primary annular groove 216a to a greater extent. Moreover, in the case of this embodiment, on the groove bottom of the primary annular groove 216a, the annular protrusion portion 216a1 is formed in the vicinity of the center in the axial direction thereof. As a result of this, the contact pressure of the gasket 400 against the mounting hole 310 can be partially increased, thus making it possible to enhance the sealing performance thereof.

EXPLANATION OF REFERENCE NUMERALS AND CHARACTERS

| | |
|---|---|
| 100 | sealing device |
| 200 | injector |
| 210, 211, 212, 213, 214, 215, 216 | annular groove |
| 211a, 212a, 213a, 214a, 215a, 216a | primary annular groove |
| 211b, 212b, 213b, 214b, 215b, 216b | secondary annular groove |
| 213a1, 214a1, 215a1, 216a1 | protrusion portion |
| 300 | housing |
| 310 | mounting hole |
| 400 | gasket |

**Claims**

1. A sealing structure **characterized by** comprising:

an injector;
a housing having a mounting hole in which the injector is mounted; and
an annular gasket being fitted in an annular groove formed in an outer periphery of the injector to seal an annular gap between the injector and the mounting hole;
wherein the annular groove has a step on its groove bottom;
the annular groove comprises:

a primary annular groove disposed at one side of the step; and
a secondary annular groove disposed at another side of the step;

the gasket is disposed so that it is filled into the primary annular groove; and
a gap between the injector and the mounting hole at a boundary section between the primary annular groove and the secondary annular groove is larger than a minute gap at an opposite side of the secondary annular groove intervened by the primary annular groove.

2. The sealing structure as set forth in claim 1, **characterized in that** the following relation is satisfied:

$$S1 < S3 < (S1 + S2).$$

where S1 is an area of a cross section of an annular space formed by the primary annular groove and a surface of the mounting hole intersected by a plane including an axis of the annular space, S2 is an area of a cross section of an annular space formed by the secondary annular groove and the surface of the mounting hole intersected by a plane including an axis of the annular space, S3 is an area of a cross section of the gasket intersected by a plane including an axis of the gasket when the gasket is in a state of not being subjected to any external force.

3. The sealing structure as set forth in claim 1 or 2, **characterized in that** the secondary annular groove is disposed at a combustion chamber side with respect to the primary annular groove.

4. The sealing structure as set forth in claim 1, 2 or 3, **characterized in that** a shape of the cross section of the gasket intersected by the plane including the axis of the gasket when the gasket is in a state of not being subjected to any external force is rectangular.

5. The sealing structure as set forth in claim 4, **characterized in that** the primary annular groove has an annular protrusion portion formed on its groove bottom in a vicinity of a center in an axial direction thereof.

(A)

200

100

X

310

210

300

400

(C)

*Fig. 1*

400

S3

*Fig. 2*

## Fig. 3A

## Fig. 3B

## Fig. 4A

## Fig. 4B

**Fig. 5A**

**Fig. 5B**

**Fig. 6A**

**Fig. 6B**

EP 2 818 688 A1

Fig. 7A

Fig. 7B

Fig. 8A

Fig. 8B

14

## INTERNATIONAL SEARCH REPORT

International application No.

PCT/JP2012/080330

### A. CLASSIFICATION OF SUBJECT MATTER
*F02M61/16*(2006.01)i, *F02M61/14*(2006.01)i, *F16J15/10*(2006.01)i

According to International Patent Classification (IPC) or to both national classification and IPC

### B. FIELDS SEARCHED

Minimum documentation searched (classification system followed by classification symbols)
F02M61/16, F02M61/14, F16J15/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2005-226517 A  (NOK Corp.), 25 August 2005 (25.08.2005), paragraphs [0028] to [0069]; fig. 1 to 7 (Family: none) | 1-5 |
| Y | CD-ROM of the specification and drawings annexed to the request of Japanese Utility Model Application No. 1080/1985(Laid-open No. 117958/1986) (Fuji Electric Co., Ltd.), 25 July 1986 (25.07.1986), page 5, line 5 to page 6, line 9; fig. 1 (Family: none) | 1-5 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search    18 December, 2012 (18.12.12) | Date of mailing of the international search report    08 January, 2013 (08.01.13) |
| Name and mailing address of the ISA/    Japanese Patent Office | Authorized officer |
| Facsimile No. | Telephone No. |

Form PCT/ISA/210 (second sheet) (July 2009)

15

**INTERNATIONAL SEARCH REPORT**

| International application No. |
|---|
| PCT/JP2012/080330 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 4-131570 A (Fuji Electric Co., Ltd.), 06 May 1992 (06.05.1992), page 3, upper left column, line 6 to upper right column, line 9 (Family: none) | 1-5 |
| Y | JP 2002-81548 A (Honda Motor Co., Ltd.), 22 March 2002 (22.03.2002), paragraph [0029]; fig. 4 (Family: none) | 5 |
| A | JP 2002-81542 A (Honda Motor Co., Ltd.), 22 March 2002 (22.03.2002), entire text; all drawings (Family: none) | 1-5 |
| A | JP 11-13593 A (Caterpillar Inc.), 19 January 1999 (19.01.1999), entire text; all drawings & US 6178950 B1 & GB 2326193 A | 1-5 |
| A | JP 2003-536019 A (Robert Bosch GmbH), 02 December 2003 (02.12.2003), entire text; all drawings & JP 2003-536019 A & US 2002/0162538 A1 & US 2005/0016501 A1 & EP 1482168 A1 & WO 2001/094776 A2 & DE 10027662 A1 & CN 1394256 A | 1-5 |
| A | JP 2004-506135 A (Robert Bosch GmbH), 26 February 2004 (26.02.2004), entire text; all drawings & US 2002/0179057 A1 & WO 2002/012717 A1 & DE 10038300 A1 & CN 1386168 A | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2002081548 A